# EUROPEAN PATENT APPLICATION

(11) **EP 4 730 110 A1**
(43) Date of publication of application: **22.04.2026**
(21) Application number: 24823242.3
(22) Date of filing: 30.05.2024
(51) Int. Cl.: G06F 8/65

(54) **PROGRAM UPDATE DEVICE, PROGRAM UPDATE METHOD, AND PROGRAM UPDATE PROGRAM**

(30) Priority: 16.06.2023 JP 2023099657
(71) Applicant: DENSO CORPORATION, Kariya-city, Aichi 448-8661 (JP)
(72) Inventor: BANNO, Yuichi, Kariya- city, Aichi 4488661 (JP); AOKI, Yasuaki, Kariya- city, Aichi 4488661 (JP); KIMOTO, Yu, Kariya- city, Aichi 4488661 (JP)
(74) Representative: Kuhnen & Wacker Patent- und Rechtsanwaltsbüro PartG mbB
(86) International application number: PCT/JP2024/019923
(87) International publication number: WO 2024/257622

(57) **Abstract**

A program update device (18) includes an obtaining unit (50) and an executing unit (52). The obtaining unit is configured to, in response to a change in an external environment necessitating switching of a power converter program for controlling a power converter (22) of a mobile body (14), obtain a power converter program (24A) adapted to the changed external environment. The executing unit is configured to install or activate the obtained power converter program.

## Description

### TECHNICAL FIELD

The present disclosure relates to a program update device, a program update method, and a program update program.

### CROSS REFERENCE TO RELATED APPLICATION

This application is based on and claims the benefit of Japanese Patent Application No. 2023-099657 filed on June 16, 2023, and the entire contents of the above application are incorporated herein by reference.

### BACKGROUND ART

JP 2022-022833 discloses a program update device for controlling a vehicle. The program update device includes a memory configured to store multiple types of vehicle control software used for various types of vehicle control, a vehicle control execution unit configured to control the vehicle using the vehicle control software, a rewrite processing unit configured to, when a request is made to rewrite the vehicle control software, perform rewrite processing on a target vehicle control software to be rewritten among the multiple types of vehicle control software, and a state determination unit configured to determine whether a control process of the vehicle using the target vehicle control software will be executed together with the rewrite processing. The vehicle control execution unit is configured to, upon determining that the control process would be executed with the rewrite processing, changes a control state of the vehicle prior to the rewrite processing so that the control process will not be executed during the rewrite processing.

### SUMMARY OF INVENTION

### TECHNICAL PROBLEM

It is preferable that the control of a power converter mounted on a mobile body is modified in accordance with changes in an external environment of the mobile body. However, it is necessary to prepare and store in advance multiple programs, parameters, and the like corresponding to various external environments to change the control in accordance with changes in the external environment, making it difficult to appropriately control the power converter in response to changes in the external environment.

It is an object of the present disclosure to provide a program update device, a program update method, and a program update program that are capable of appropriately controlling a power converter in response to changes in the external environment of a mobile body.

### SOLUTION TO PROBLEM

According to a first aspect of the present disclosure, a program update device includes an obtaining unit and an executing unit. The obtaining unit is configured to, in response to a change in an external environment necessitating switching of a power converter program for controlling a power converter of a mobile body, obtain a power converter program adapted to the changed external environment. The executing unit is configured to install or activate the obtained power converter program.

According to a second aspect, a program update method includes causing at least one processor to, in response to a change in an external environment necessitating switching of a power converter program for controlling a power converter of a mobile body, obtain a power converter program adapted to the changed external environment, and install or activate the obtained power converter program.

A program update program according to a third aspect causes at least one processor to, in response to a change in an external environment necessitating switching of a power converter program for controlling a power converter of a mobile body, obtain a power converter program adapted to the changed external environment, and install or activate the obtained power converter program.

### EFFECTS OF INVENTION

According to the present disclosure, it is possible to appropriately control a power converter in response to changes in the external environment of a mobile body.

### BRIEF DESCRIPTION OF DRAWINGS

FIG. 1 is a configuration diagram of a vehicle control system.
FIG. 2 is a block diagram showing the hardware configuration of a communication ECU.
FIG. 3 is a functional block diagram of the communication ECU.
FIG. 4 is a flowchart of a program update process.

### DESCRIPTION OF EMBODIMENTS

Hereinafter, embodiments for carrying out the technique disclosed in the present disclosure will be described in detail with reference to the drawings.

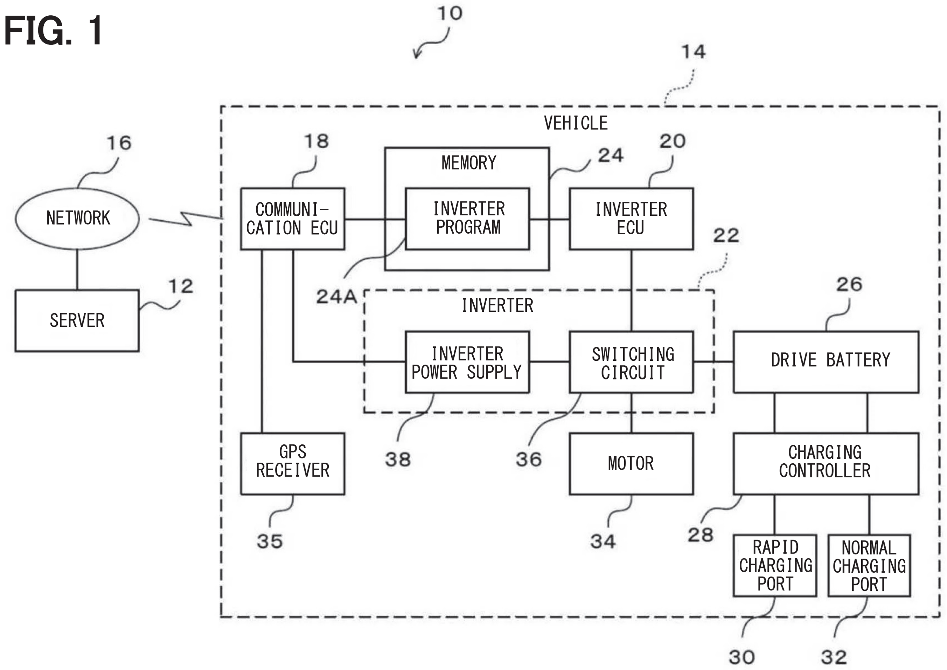

As shown in FIG. 1, a vehicle control system 10 of the present embodiment includes a server 12 and a vehicle 14. The server 12 and the vehicle 14 are connected via a network 16.

The vehicle 14 includes a communication ECU (Electronic Control Unit) 18, an inverter ECU (Electronic Control Unit) 20, an inverter 22, a memory 24, a drive battery 26, a charging controller 28, a rapid charging port 30, a normal charging port 32, a motor 34, and a GPS receiver 35. It should be noted that the vehicle 14 is an example of a mobile body according to the present disclosure. In addition, the inverter 22 is an example of a power converter according to the present disclosure.

The inverter 22 includes a switching circuit 36 and an inverter power supply 38. The switching circuit 36 includes multiple switching elements (not shown). As the switching elements, IGBTs (Insulated Gate Bipolar Transistors) may be used, but the present disclosure is not limited thereto. On and off of each switching element is controlled according to instructions from the inverter ECU 20.

On and off of the inverter power supply 38 is controlled by the communication ECU 18, and the inverter power supply 38 supplies power for driving gates of the switching elements in the switching circuit 36.

The switching circuit 36 is supplied with power from the drive battery 26 to drive the motor 34, and controlled through switching control to output a drive voltage for driving the motor 34 to the motor 34.

The memory 24 may be formed of non-volatile memory, and stores an inverter program 24A executed by the inverter ECU 20. It should be noted that the inverter program 24A is an example of a power converter program.

The communication ECU 18 downloads the inverter program 24A, which is executed by the inverter ECU 20, from the server 12 via the network 16, and performs installation or activation of the downloaded inverter program 24A. Here, installation of the inverter program 24A refers to storing the inverter program 24A in the memory 24 to make it executable. In addition, activation of the inverter program 24A refers to enabling the functions realized by execution of the inverter program 24A. It should be noted that, hereinafter, performing installation or activation of the inverter program 24A may be referred to as updating the inverter program 24A.

The inverter ECU 20 controls the switching circuit 36 of the inverter 22 by executing the installed or activated inverter program 24A.

The drive battery 26 is a power source that supplies a DC voltage for driving the motor 34, and its charging is controlled by the charging controller 28.

The charging controller 28 charges the drive battery 26 based on power supplied from an external power source (not shown) to the rapid charging port 30 or the normal charging port 32. Specifically, the charging controller 28 converts an AC voltage such as AC 200V supplied to the normal charging port 32 into DC voltage and charges the drive battery 26. In addition, the charging controller 28 charges the drive battery 26 using a high-voltage direct current supplied to the rapid charging port 30.

The GPS receiver 35 is connected to the communication ECU 18. The GPS receiver 35 receives GPS signals from GPS (Global Positioning System) satellites. The communication ECU 18 calculates the position of the vehicle 14 based on the GPS signals received by the GPS receiver 35.

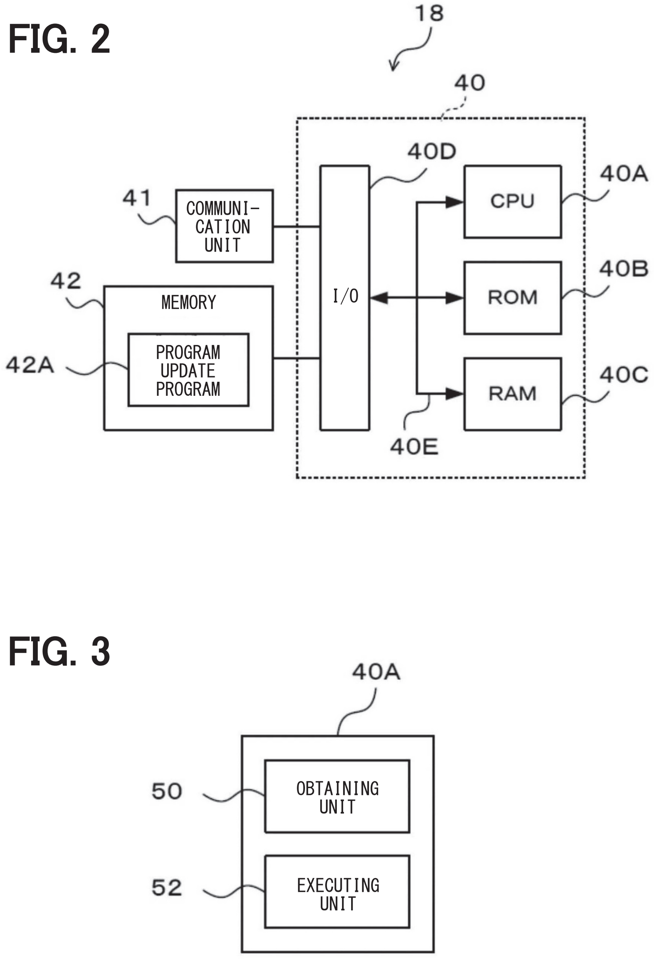

FIG. 2 is a block diagram showing the hardware configuration of the communication ECU 18. As shown in FIG. 2, the communication ECU 18 includes a controller 40.

The controller 40 includes a CPU (Central Processing Unit) 40A, a ROM (Read Only Memory) 40B, a RAM (Random Access Memory) 40C, and an input/output interface (I/O) 40D. The CPU 40A, ROM 40B, RAM 40C, and I/O 40D are connected to each other via a bus 40E. The bus 40E includes a control bus, an address bus, and a data bus. To the I/O 40D, a communication unit 41 and a memory 42 are connected.

The communication unit 41 is an interface for performing data communication with devices such as the server 12 and the inverter ECU 20.

The memory 42 maty be formed by a non-volatile memory. As shown in FIG. 2, the memory 42 stores a program update program 42A.

The CPU 40A is an example of a processor. The term "processor" as used here refers to a processor in a broad sense, and includes general-purpose processors (for example, CPUs) as well as dedicated processors (for example, GPUs: Graphics Processing Units, ASICs: Application Specific Integrated Circuits, FPGAs: Field Programmable Gate Arrays, programmable logic devices, etc.).

The program update program 42A may be stored on a non-volatile, non-transitory recording medium, or distributed via a network and installed as appropriate in the communication ECU 18.

Examples of non-volatile, non-transitory recording media include CD-ROM (Compact Disc Read Only Memory), magneto-optical disks, HDDs (Hard Disk Drives), DVD-ROM (Digital Versatile Disc Read Only Memory), flash memory, and memory cards.

FIG. 3 is a block diagram showing the functional configuration of the CPU 40A of the communication ECU 18. As shown in FIG. 3, the CPU 40A includes functional units such as an obtaining unit 50 and an executing unit 52. The CPU 40A functions as each of the functional units by reading and executing the program update program 42A stored in the memory 42.

The obtaining unit 50 obtains, when the external environment of the vehicle 14 changes in a manner that necessitates switching of the inverter program 24A for controlling the inverter 22 of the vehicle 14, the inverter program 24A adapted to the changed external environment condition from the server 12 through the network 16.

The executing unit 52 performs installation or activation of the inverter program 24A obtained by the obtaining unit 50. This is because the inverter 22 should be controlled using the inverter program 24A suitable for the changed external environment.

For example, when the vehicle 14 moves into a travelling area where the inverter program 24A should be changed, the obtaining unit 50 may acquire the inverter program 24A adapted to the travelling area.

In this case, when the vehicle 14 moves into a beyond-boundary area across a boundary, the obtaining unit 50 may obtain the inverter program 24A adapted to the beyond-boundary area. Examples of the beyond-boundary area include countries, continents, states, prefectures, and municipalities, but are not limited thereto. When crossing such a regional boundary, the inverter program 24A adapted to that area may be obtained.

Further, when the vehicle 14 crosses a national border, the obtaining unit 50 may obtain the inverter program 24A that complies with the electromagnetic wave regulations of a country beyond the national border. For example, there are countries, such as those in Europe, where electromagnetic wave regulations are strict. Thus, when the vehicle 14 crosses the national border, the obtaining unit 50 may obtain the inverter program 24A that complies with the electromagnetic wave regulations of the country beyond the national border, that is, the inverter program 24A that controls the inverter 22 at a drive frequency which suppresses generation of electromagnetic waves.

Further, the obtaining unit 50 may obtain the inverter program 24A adapted to characteristics of the changed travelling area. Here, the characteristics of the changed travelling area refer to characteristics that should be taken into consideration in controlling the inverter 22 when the vehicle 14 is traveling.

For example, if the travelling area is within an area such as a residential district where the vehicle 14 tends to stop and start frequently, the obtaining unit 50 may obtain the inverter program 24A that enables the vehicle 14 to stop and start smoothly.

If the travelling area is within an area having high pedestrian traffic, such as an urban area or downtown district, the obtaining unit 50 may obtain the inverter program 24A that sets the drive frequency of the inverter 22 to an audible frequency range so that people can notice the presence of the vehicle 14.

If the travelling area is within an area having a relatively high incidence of traffic accidents, the obtaining unit 50 may obtain the inverter program 24A that controls the inverter 22 to suppress the drive torque of the motor 34 to a lower level compared to areas with relatively fewer traffic accidents.

Additionally, when the obtaining unit 50 can obtain a GPS signal from the GPS receiver 35 installed in the vehicle 14, the obtaining unit 50 may determine whether the travelling area of the vehicle 14 has changed to an area that necessitates switching of the inverter program 24A based on the obtained GPS signal. When the obtaining unit 50 cannot obtain a GPS signal, the obtaining unit 50 may determine whether the travelling area of the vehicle 14 has changed by using a communication address for communicating with an external device via the network 16. For example, there may be cases where the GPS receiver 35 is unable to obtain a GPS signal due to malfunction. Thus, when a GPS signal cannot be obtained, the travelling area of the vehicle 14 may be identified using a communication address such as an IP address. It should be noted that the communication address is not limited to an IP address, as long as it can identify the travelling area.

Additionally, the obtaining unit 50 may obtain weather condition information of the travelling area of the vehicle 14, and when the obtained travelling condition information has changed, the obtaining unit 50 may obtain the inverter program 24A adapted to the changed weather condition information. Here, the weather condition information includes at least one of temperature information relating to temperature and weather information relating to weather forecast.

For example, the obtaining unit 50 may obtain temperature information as the weather condition information, and when the obtained temperature information changes, the obtaining unit 50 may obtain the inverter program 24A adapted to the changed temperature information. Here, the temperature information includes at least one of information relating to the season of the area in which the vehicle 14 is traveling, information relating to the average temperature in the area, and information relating to the temperature, such as the temperature measured by a temperature sensor (not shown). Among the temperature information, information relating to the season and information relating to the average temperature may be obtained by specifying the travelling area of the vehicle 14 based on a GPS signal received by the GPS receiver 35, and requesting the temperature information of the specified travelling area for the server 12 via the network 16.

For example, when the travelling area of the vehicle 14 is within an area with a high average temperature, the obtaining unit 50 may obtain the inverter program 24A that sets a lower drive frequency for the inverter 22 compared to that in an area with a low average temperature, so that the temperature of the inverter 22 does not become excessively high.

The obtaining unit 50 may obtain weather information as the weather condition information, and when the obtained weather information changes, the obtaining unit 50 may obtain the inverter program 24A adapted to the changed weather information.

For example, the weather information can be obtained by specifying the travelling area of the vehicle 14 based on a GPS signal received by the GPS receiver 35, and requesting the weather information in the specified travelling area for the server 12 via the network 16.

For example, when the weather in the travelling area of the vehicle 14 is rainy or snowy (that is, slipping is likely to occur in the travelling area of the vehicle), the obtaining unit 50 may obtain the inverter program 24A having a torque profile that enables stable driving without slipping.

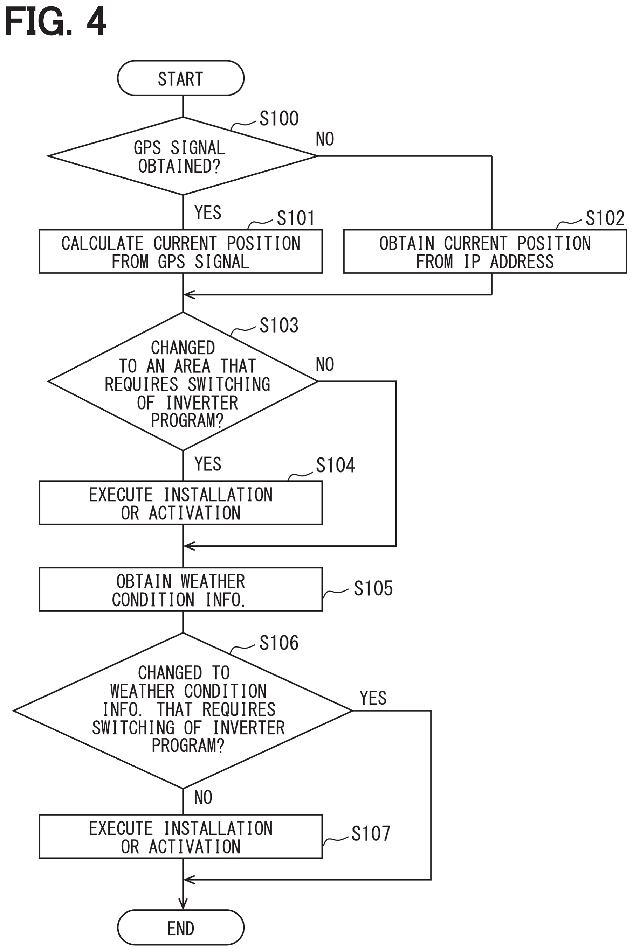

Next, the flowchart of the program update processing executed by the CPU 40A of the communication ECU 18 will be described with reference to FIG. 4. It should be noted that the processing shown in FIG. 4 is repeatedly executed.

In step S100, the CPU 40A determines whether a GPS signal has been received from the GPS receiver 35. If the GPS signal can be received, that is, if the current position of the vehicle 14 can be obtained based on the GPS signal, the process proceeds to step S101. On the other hand, if the GPS signal cannot be received, that is, if the current position of the vehicle 14 cannot be obtained based on the GPS signal, the process proceeds to step S102.

In step S101, the CPU 40A calculates the current position of the vehicle 14 based on the GPS signal obtained from the GPS receiver 35.

In step S102, the CPU 40A obtains the current position of the vehicle 14 from the IP address used when communicating with an external device such as the server 12 via the network 16.

In step S103, the CPU 40A determines, based on the current position of the vehicle 14 obtained in step S101 or step S102, whether the travelling area of the vehicle 14 has changed to an area that necessitates switching of the inverter program 24A. That is, as described above, it is determined, for example, whether the vehicle 14 has crossed a national border or whether the characteristics of the travelling area have changed. Then, if the travelling area of the vehicle 14 has not changed to the area that necessitates switching of the inverter program 24A, the process proceeds to step S105. On the other hand, if the travelling area of the vehicle 14 has changed to the area that necessitates switching of the inverter program 24A, the process proceeds to step S104.

In step S104, the CPU 40A executes the installation or activation of the inverter program 24A. Specifically, when executing the installation of the inverter program 24A, the inverter program 24A to be installed, that is the inverter program 24A adapted to the travelling area of the vehicle 14, is obtained from the server 12 and installed in the memory 24. Further, if the inverter program 24A adapted to the travelling area of the vehicle 14 has already been installed, the activation of the inverter program 24A is performed. As a result, the installation or activation of the inverter program 24A is executed by the communication ECU 18 of the vehicle 14.

In step S105, the CPU 40A acquires weather condition information for the travelling area of the vehicle 14. For example, weather condition information for the current position of the vehicle 14, which is obtained in step S101 or step S102, is requested from the server 12 and acquired.

In step S106, the CPU 40A determines whether the weather condition information for the travelling area of the vehicle 14, which is obtained in step S105, has changed to weather condition information that necessitates switching of the inverter program 24A. That is, as described above, it is determined whether the temperature information has changed or whether the weather information has changed. If the weather condition information for the travelling area of the vehicle 14 has changed to weather condition information that necessitates switching of the inverter program 24A, the process proceeds to step S107. On the other hand, if the weather condition information for the travelling area of the vehicle 14 has not changed to weather condition information that necessitates switching of the inverter program 24A, the routine is ended.

In step S107, similarly to step S104, the CPU 40A executes installation or activation of the inverter program 24A. Specifically, when executing installation of the inverter program 24A, the inverter program 24A to be installed, that is, the inverter program 24A adapted to the weather condition information of the travelling area of the vehicle 14 is obtained from the server 12 and installed in the memory 24. In addition, if the inverter program 24A adapted to the weather condition information of the travelling area of the vehicle 14 has already been installed, the activation of the inverter program 24A is executed. As a result, the installation or activation of the inverter program 24A is executed by the communication ECU 18 of the vehicle 14.

As described above, in the present embodiment, in response to a change in the external environment of the vehicle 14 that necessitates switching of the inverter program 24A for controlling the inverter 22 of the vehicle 14, the inverter program 24A adapted to the changed external environment is obtained, and installation or activation of the obtained inverter program 24A is executed. As a result, it is possible to appropriately control the inverter 22 in accordance with changes in the external environment of the vehicle 14.

It should be noted that the present disclosure is not limited to the embodiments described above, and various modifications and applications can be made without departing from the gist of the present disclosure.

In the above embodiment, the case where the processing shown in FIG. 4 is executed by the communication ECU 18 has been described, but the server 12 may execute the processing shown in FIG. 4 instead. In this case, the server 12 serves as a program update device of the present disclosure.

In addition, the configuration of the vehicle control system 10 described in the above embodiment (see FIG. 1) is merely an example, and it goes without saying that unnecessary parts may be removed or new parts may be added within the scope not departing from the gist of the present disclosure.

Similarly, the processing flow of the program update program 42A described in the above embodiment (see FIG. 4) is also merely an example, and it goes without saying that unnecessary steps may be omitted, new steps may be added, or the order of processing may be changed, as long as it does not depart from the gist of the present disclosure.

In the above embodiment, the case where the mobile body is a vehicle 14 has been described, but the present disclosure is not limited to this. The mobile body may be an air mobility such as an aircraft, or a vessel. In this case, "travelling" in the present embodiment should be interpreted as "moving."

In the above embodiment, the case where the power converter is the inverter 22 for driving the vehicle 14 has been described, but the present disclosure is not limited to this. For example, the power converter may be an inverter for an air conditioner, an inverter for electric power steering, or a DC-DC converter. Furthermore, the DC-DC converter may be a step-down DC-DC converter, a step-up DC-DC converter, a buck-boost DC-DC converter, or a DC-DC converter for charging.

The controller and its methods described in the present disclosure may be implemented by a dedicated computer comprising one or more processors programmed to execute functions embodied as a computer program. Alternatively, the device and method described in the present disclosure may be implemented by a dedicated computer comprising a processor configured by dedicated hardware logic circuits. Alternatively, the device and method described in the present disclosure may be implemented by one or more dedicated computers configured by a combination of a processor executing a computer program and one or more hardware logic circuits. Furthermore, the computer program may be stored as instructions executable by a computer on a non-transitory computer-readable tangible recording medium.

According to the technique in the present disclosure, the following items are disclosed.

### <Items>

### (item 1)

A program update device (18) includes an obtaining unit (50) and an executing unit (52). The obtaining unit is configured to, in response to a change in an external environment necessitating switching of a power converter program for controlling a power converter (22) of a mobile body (14), obtain a power converter program (24A) adapted to the changed external environment. The executing unit is configured to install or activate the obtained power converter program.

### (item 2)

In the program update device according to item 1, the obtaining unit is configured to, in response moving into a travelling area that necessitates switching of the power converter program, obtain the power converter program adapted to the travelling area.

### (item 3)

In the program update device according to item 2, the obtaining unit is configured to, in response to moving into a beyond-boundary area across a regional boundary, obtain the power converter program adapted to the beyond-boundary area.

### (Item 4)

In the program update device according to item 3, the regional boundary is a national border. The obtaining unit is configured to, upon determining that the mobile body crosses the national border to move into a country, obtain the power converter program adapted to an electromagnetic wave regulation in the country beyond the national border.

### (Item 5)

In the program update device according to item 2, the obtaining unit is configured to obtain the power converter program adapted to characteristics of the travelling area.

### (Item 6)

In the program update device according to any one of items 2 to 5, the obtaining unit is configured to determine whether the mobile body moves into the travelling area that necessitates switching of the power converter program: based on a GPS signal when the GPS signal is obtained from a GPS receiver (35) in the mobile body; or using a communication address for communication with an external device when the GPS signal is not obtained.

### (Item 7)

In the program update device according to any one of items 1 to 6, the obtaining unit is configured to obtain weather condition information of a travelling area of the mobile body, and in response to a change in the weather information necessitating switching of the power converter program, obtain the power converter program adapted to the changed weather condition information.

### (Item 8)

In the program update device according to item 7, the obtaining unit is configured to obtain temperature information as the weather condition information, and in response to a change in the temperature information necessitating switching of the power converter program, obtain the power converter program adapted to the changed temperature information.

### (Item 9)

In the program update device according to item 7, the obtaining unit is configured to obtain weather information as the weather condition information, and in response to a change in the weather information necessitating switching of the power converter program, obtain the power converter program adapted to the changed weather information.

### (Item 10)

In the program update device according to any one of items 1 to 9, the obtaining unit is configured to obtain the power converter program adapted to the changed external environment for controlling the power converter with a different drive frequency.

### (Item 11)

A program update method executed by a processor (40A) includes, in response to a change in an external environment necessitating of switching a power converter program for controlling a power converter of a mobile body, obtaining a power converter program adapted to the changed external environment, and installing or activating the obtained power converter program.

### (Item 12)

A program update program configured to cause a processor to, in response to a change in an external environment necessitating of switching a power converter program for controlling a power converter of a mobile body, obtain a power converter program adapted to the changed external environment, and install or activate the obtained power converter program.

## Claims

1. A program update device (18) comprising:
an obtaining unit (50) configured to, in response to a change in an external environment necessitating switching of a power converter program for controlling a power converter (22) of a mobile body (14), obtain a power converter program (24A) adapted to the changed external environment; and
an executing unit (52) configured to install or activate the obtained power converter program.

2. The program update device according to claim 1, wherein
in response to moving into a travelling area that necessitates switching of the power converter program, the obtaining unit is configured to obtain the power converter program adapted to the travelling area.

3. The program update device according to claim 2, wherein
in response to moving into a beyond-boundary area across a regional boundary, the obtaining unit is configured to obtain the power converter program adapted to the beyond-boundary area.

4. The program update device according to claim 3, wherein
the regional boundary is a national border, and
the obtaining unit is configured to, upon determining that the mobile body crosses the national border to move into a country, obtain the power converter program adapted to an electromagnetic wave regulation in the country beyond the national border.

5. The program update device according to claim 2, wherein
the obtaining unit is configured to obtain the power converter program adapted to characteristics of the travelling area.

6. The program update device according to claim 2, wherein
the obtaining unit is configured to determine whether the mobile body moves into the travelling area that necessitates switching of the power converter program:
based on a GPS signal when the GPS signal is obtained from a GPS receiver (35) in the mobile body; or
using a communication address for communication with an external device when the GPS signal is not obtained.

7. The program update device according to claim 1, wherein
the obtaining unit is configured to:
obtain weather condition information of a travelling area of the mobile body; and
in response to a change in the weather condition information necessitating switching of the power converter program, obtain the power converter program adapted to the changed weather condition information.

8. The program update device according to claim 7, wherein
the obtaining unit is configured to:
obtain temperature information as the weather condition information; and
in response to a change in the temperature information necessitating switching of the power converter program, obtain the power converter program adapted to the changed temperature information.

9. The program update device according to claim 7, wherein
the obtaining unit is configured to:
obtain weather information as the weather condition information; and
in response to a change in the weather information necessitating switching of the power converter program, obtain the power converter program adapted to the changed weather information.

10. The program update device according to claim 1, wherein
the obtaining unit is configured to obtain the power converter program adapted to the changed external environment for controlling the power converter with a different drive frequency.

11. A program update method executed by at least one processor (40A), the program update method comprising:
in response to a change in an external environment necessitating switching of a power converter program for controlling a power converter of a mobile body, obtaining a power converter program adapted to the changed external environment; and
installing or activating the obtained power converter program.

12. A program update program (42A) configured to cause at least one processor to:
in response to a change in an external environment necessitating switching of a power converter program for controlling a power converter of a mobile body, obtain a power converter program adapted to the changed external environment; and
install or activate the obtained power converter program.
